# FASCICULE DE BREVET EUROPEEN

(11) **EP 4 234 243 B1**
(45) Date de publication et mention de la délivrance du brevet: **24.07.2024**
(21) Numéro de dépôt: 23156679.5
(22) Date de dépôt: 15.02.2023
(51) Int. Cl.: B33Y 10/00, A46B 9/02

(54) **APPLICATEUR POUR PRODUIT COSMÉTIQUE COMPORTANT UNE PARTIE MOBILE COMPRENANT AU MOINS UNE CHAÎNE DE BOUCLES OUVERTES**
APPLIKATOR FÜR EIN KOSMETIKPRODUKT MIT EINEM BEWEGLICHEN TEIL MIT MINDESTENS EINER OFFENEN SCHLEIFENKETTE
APPLICATOR FOR A COSMETIC PRODUCT COMPRISING A MOBILE PART COMPRISING AT LEAST ONE OPEN LOOP CHAIN

(30) Priorité: 23.02.2022 FR 2201610
(43) Date de publication de la demande: 30.08.2023
(73) Titulaire: Chanel Parfums Beauté, 92200 Neuilly-sur-Seine (FR)
(72) Inventeur: CASTEX, Nicolas, 92521 Neuilly-sur-Seine (FR); LAMOUREUX, Marie, 92521 Neuilly-sur-Seine (FR); CHAPELAT, Carole, 2500 Biel/Bienne 7 (CH); BONADEI, Antoine, 2500 Biel/Bienne 7 (CH)
(74) Mandataire: Santarelli

(56) Documents cités:
- WO-A1-2021/058211
- FR-A1- 3 090 301

## Description

La présente invention concerne le domaine des applicateurs pour produit cosmétique. Elle concerne en particulier un applicateur adapté à l'application d'un produit cosmétique tel qu'un mascara sur des poils tels que les cils et les sourcils. Un tel applicateur pour produit cosmétique est désigné par l'expression « applicateur à mascara » ou simplement « applicateur » dans le présent document.

Un tel applicateur est généralement un élément constitutif d'un article de mascara. Un article de mascara comprend classiquement un étui, un réservoir de mascara et un pinceau applicateur. Le pinceau applicateur comporte une partie de préhension et un applicateur à proprement parler, qui se présente généralement sous la forme d'une brosse.

Le pinceau applicateur peut comporter ou former de manière connue, un capuchon ou bouchon adapté à obturer le réservoir en dehors des applications de mascara. Ce capuchon peut former la partie de préhension du pinceau applicateur.

Il existe classiquement plusieurs types d'applicateurs : ceux de type « goupillon », ceux injectés et ceux fabriqués par fabrication additive (parfois appelée « synthèse additive » ou « impression 3D »). La fabrication additive désigne les procédés de fabrication par ajout ou agrégation de matière.

Un applicateur de type goupillon comporte une brosse qui comprend des poils formés par des fibres emprisonnées dans un fil métallique torsadé formant l'âme de l'applicateur. Un applicateur injecté est généralement formé d'une seule pièce et comporte des poils ou des dents, en matière plastique par exemple, généralement appelés protubérances. Un applicateur obtenu par fabrication additive est lui aussi généralement d'une seule pièce et peut être formé par exemple à partir d'une poudre de polymères thermoplastiques via un procédé mettant par exemple en oeuvre la fusion de poudre par laser.

Quelle que soit la forme et le mode de réalisation d'un applicateur à mascara connu, le principe d'application du produit consiste à charger l'applicateur en produit cosmétique (en mascara) contenu dans le réservoir, à extraire dudit réservoir l'applicateur dont les protubérances sont chargées en produit, et à réaliser l'application sur les cils ou les sourcils de l'utilisateur ou l'utilisatrice.

Par simplicité on utilise simplement le terme utilisatrice dans le reste du présent document, sans exclure que l'article et/ou l'applicateur soit utilisé par un utilisateur. Par simplicité, on évoque également dans la suite du présent document uniquement les cils, sans toutefois exclure une utilisation du produit et de l'applicateur aux sourcils de l'utilisatrice.

Les brosses connues, qu'elles soient de type goupillon, en matière plastique injectée, ou obtenues par synthèse additive, sont susceptibles de donner de bons résultats de maquillage. Cependant, on est toujours à la recherche d'améliorations du résultat de l'application du produit et du confort d'utilisation pour l'utilisatrice. Il est ainsi souhaitable de concevoir des applicateurs ayant une bonne capacité de rétention de produit cosmétique, qui entraînent une bonne séparation des cils, un bon effet allongeant et/ou recourbant des cils. De même, il est recherché de configurer l'applicateur pour offrir la meilleure qualité d'application possible, notamment la meilleure régularité, avec une gestuelle simple.

Le document WO2021/058211 présente un applicateur pour produit cosmétique comprenant une âme longitudinale formant des cavités dans lesquelles sont incluses des pièces mobiles qui portent des protubérances. Un tel applicateur améliore l'application du produit sur les cils. Néanmoins, cet applicateur ne permet pas l'obtention d'un résultat similaire à celui obtenu par un maquilleur professionnel, qui peigne les cils non seulement dans leur direction d'implantation mais également selon de légers mouvements de va et vient transversaux, dits en « zigzag ». La présence de petits blocs mobiles crée des zones où toutes les protubérances de la zone considérées sont mobiles ensembles de sorte qu'il n'y a pas d'adaptation de la distance entre les protubérances dans ces zones. En outre, il n'y aucune cohérence dans le mouvement des différentes parties mobiles. Il peut en résulter une application imparfaite, avec notamment la formation de paquets de produit cosmétique. En outre, cet applicateur est particulièrement complexe à réaliser et, du fait de sa configuration, les cavités qu'il comporte sont susceptibles d'être rapidement encrassées par le produit cosmétique, de sorte que l'applicateur perd rapidement les avantages de la présence d'éléments mobiles. En outre, l'applicateur proposé dans ce document a une géométrie qui le rend rigide et perçu comme tel lors de l'application du produit.

La présente invention vise ainsi à proposer un applicateur de produit cosmétique, notamment un applicateur à mascara, qui améliore les applicateurs existants sur au moins l'un des aspects énoncés ci-dessus.

L'invention porte ainsi sur un applicateur pour produit cosmétique présentant une forme générale allongée et s'étendant selon un axe longitudinal définissant une direction longitudinale. L'applicateur comporte une partie fixe, destinée à être rigidement liée à une partie de préhension ou formée de manière monobloc avec ladite partie de préhension, et une partie mobile vis-à-vis de la partie fixe. La partie mobile comporte des protubérances. La partie mobile comporte au moins une chaîne comportant un brin formant une succession de boucles ouvertes, ladite chaîne s'étendant sensiblement parallèlement à l'axe longitudinal. La partie fixe comporte au moins deux maillons, et au moins deux desdites boucles ouvertes de chaque chaîne étant traversées par un maillon de la partie fixe. Ainsi chaque chaîne de la partie mobile est fixée avec au moins un degré de liberté à la partie fixe, permettant un déplacement relatif de la chaîne vis-à-vis de la partie fixe dans la direction longitudinale.

La liberté de mouvement de la partie mobile rend l'application du produit cosmétique plus agréable. En effet, même si l'applicateur est formé de matériaux plastiques relativement durs, ce qui est notamment le cas s'il est formé par fabrication additive, la mobilité d'une partie de l'applicateur permet aux protubérances qu'elle porte de pénétrer en douceur dans la frange des cils, en s'adaptant en partie à la position des cils de l'utilisatrice.

En outre, il a été constaté que l'application du produit cosmétique, en particulier d'un mascara, avec un applicateur conforme à la présente invention était, dans certaines configurations de l'invention, réalisée en deux temps. D'abord, les interstices entre les protubérances, chargés de produits, se déchargent au contact des cils. Cela libère la partie mobile (dont le mouvement est initialement limité par le produit que porte l'applicateur), ce qui permet de peigner les cils plus efficacement qu'un applicateur de configuration analogue sans partie mobile portant des protubérances. En particulier, le mouvement longitudinal de la partie mobile permet d'obtenir l'effet d'un maquillage analogue à celui réalisé par un professionnel, qui peigne les cils non seulement dans leur direction d'implantation mais également selon de légers mouvements de va et vient transversaux. Cela améliore, pour un mascara, ses effets recourbant, allongeant, et générateur de volume.

La configuration de la partie mobile, sous la forme de chaînes de boucles ouvertes, procure à la partie mobile une mobilité importante et une souplesse accrue, qui augmentent les avantages décrits ci-dessus.

De manière générale, la présence d'une partie mobile permet de modifier localement la densité des protubérances, ce qui, selon le mouvement de l'utilisatrice lors de l'application, permet de moduler le résultat de cette application. L'applicateur proposé selon la présente invention permet ainsi potentiellement de produire les effets de différentes brosses.

Selon certains modes de réalisation, chaque chaîne de la partie mobile forme un premier rang de boucles ouvertes et un deuxième rang de boucles ouvertes, le premier rang de boucles ouvertes étant formé dans un premier plan parallèle à l'axe longitudinal, le deuxième rang de boucles ouvertes étant formé dans un deuxième plan parallèle à l'axe longitudinal, distinct dudit premier plan.

Les chaînes de la partie mobile peuvent être au nombre de deux.

Avec cette configuration, les protubérances mobiles peuvent être obtenues dans toutes les directions radiales avec seulement deux chaînes mobiles.

La partie fixe peut comporter une âme centrale s'étendant selon l'axe longitudinal. L'âme centrale, qui peut en particulier être droite, confère à l'applicateur une certaine rigidité transversale. Elle sert avantageusement de structure d'appui et de guide longitudinal pour la partie mobile. Le cas échéant, elle sert aussi de guide pour le pivotement des chaînes de la partie mobile autour de l'axe longitudinal.

L'âme centrale peut comporter une première extrémité et une deuxième extrémité, la première extrémité et la deuxième extrémité portant chacune au moins un maillon.

La liaison entre la partie fixe et les chaînes de la partie mobile peut ainsi être limitée aux deux extrémités de l'âme. Cela permet aux chaînes de la partie mobile d'être non seulement mobiles longitudinalement, dans une certaine mesure, mais également de se courber, de se déformer, entre ces deux points de liaison. La souplesse de l'applicateur ressentie par son utilisatrice et le confort de l'application sont ainsi augmentés.

L'âme centrale peut porter au moins une rangée de maillons s'étendant sur toute une longueur de l'âme centrale, selon la direction longitudinale, et est configurée de sorte que chaque boucle de chaque chaîne de la partie mobile est traversée par deux maillons.

Dans une telle configuration, la partie mobile peut être liée, avec une certaine liberté, sur l'ensemble de la longueur de l'âme de l'applicateur, soit, par exemple, sur l'ensemble de la longueur de l'applicateur. Cela améliore le guidage de la partie mobile.

Au moins une portion longitudinale de la partie fixe de l'applicateur peut comporter un ou plusieurs brins formant chacun une chaîne de maillons ouverts entrelacés avec au moins certaines des boucles ouvertes de la partie mobile.

Les chaînes de la partie mobile et les chaînes de la partie fixe peuvent avoir une même configuration
Une partie fixe constituée en partie de brins de maillons ouverts a une grande souplesse, en particulier dans la direction transversale. Cette souplesse apportée par une configuration géométrique particulière peut par exemple permettre de compenser la rigidité intrinsèque du matériau utilisé pour former l'applicateur.

La partie fixe de l'applicateur peut porter des protubérances. Les protubérances, tant de la partie mobile que, le cas échéant, de la partie fixe, peuvent être orientées sensiblement perpendiculairement à l'axe longitudinal. Les protubérances de la partie fixe peuvent différer en taille et/ou en forme des protubérances de la partie mobile. Chaque protubérance peut être par exemple sensiblement cylindrique ou prismatique et peut avoir par exemple une longueur comprise entre 0,2 mm et 0,5mm par exemple entre 0,24 mm et 0,40 mm.

Les protubérances de chacune des parties de l'applicateur peuvent ainsi avoir des effets distincts sur l'application du produit cosmétique. Par exemple, une alternance de protubérances longues et de protubérances courtes peut augmenter la capacité de rétention de produit de l'applicateur, et augmenter sa capacité à séparer les cils lors de l'application du produit. Des protubérances longues ont une meilleure capacité à peigner les cils. La forme générale des protubérances permet de moduler leurs propriétés. Par exemple, les protubérances peuvent avoir une forme allongée de section fixe (elles sont alors prismatiques ou cylindriques) ou variable.

Chaque protubérance peut comporter une extrémité libre opposée à l'axe longitudinal, ledit applicateur s'inscrivant dans une enveloppe extérieure définie par les extrémités libres des protubérances, ladite enveloppe étant sensiblement cylindrique et d'un diamètre compris entre 6 mm et 10 mm, par exemple entre 7 mm et 9 mm, tel que 8 mm.

Une telle enveloppe géométrique extérieure de l'applicateur le rend efficace pour l'application du produit cosmétique et agréable à utiliser.

La partie fixe de l'applicateur peut être réalisée en polyamide, par exemple en polyamide 11, ou en polypropylène.

La partie mobile de l'applicateur peut être réalisée en polyamide, par exemple en polyamide 11, ou en polypropylène

L'applicateur peut ainsi être constitué d'un seul matériau ou de deux matériaux distincts. Les matériaux plastiques adaptés à être utilisés dans un procédé de fabrication additive de l'applicateur sont préférés. En effet l'applicateur est avantageusement réalisé selon un procédé de fabrication additive (ou « impression 3D »), qui permet l'obtention des formes complexes liées à la mobilité de la partie mobile, en particulier les formes en boucles ouvertes qu'elle comporte.

L'invention porte également sur un procédé de fabrication d'un applicateur tel que précédemment décrit, ledit procédé comportant une étape de fusion sur lit de poudre d'un matériau plastique

D'autres particularités et avantages de l'invention apparaîtront encore dans la description ci-après.

Aux dessins annexés, donnés à titre d'exemples non limitatifs :
la figure 1 représente, selon une vue schématique en trois dimensions, un applicateur conforme à un mode de réalisation de l'invention ;
la figure 2 représente, selon un schéma de principe, une chaîne utilisée dans l'applicateur de la figure 1 ;
la figure 3 représente, selon un schéma de principe, un exemple de répartition de protubérances pouvant être obtenu avec un applicateur de produit cosmétique conforme au mode de réalisation de la figure 1 ;
la figure 4 représente, selon une vue schématique en trois dimensions, un applicateur conforme à un autre mode de réalisation de l'invention ;
la figure 5 représente, selon une vue schématique en trois dimensions, un applicateur conforme à un autre mode de réalisation de l'invention ;
la figure 6 représente, selon une vue schématique en trois dimensions, un applicateur conforme à un autre mode de réalisation de l'invention.

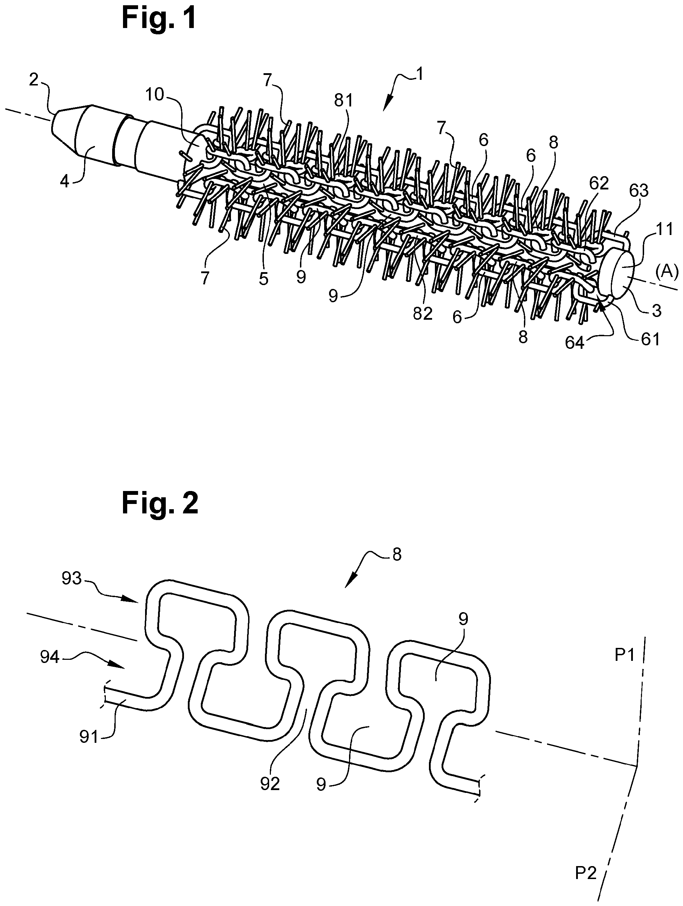

L'applicateur de la figure 1 est de forme allongée, et s'étend le long d'un axe longitudinal A qui forme l'axe principal de l'applicateur. L'applicateur 1 de la figure 1 est ainsi formé entre une première extrémité 2 destinée à être liée à une partie de préhension afin de former un pinceau applicateur et une deuxième extrémité 3 qui est libre. En particulier la première extrémité est formée au bout d'un élément de jonction 4 destiné à être lié à une partie de préhension. Selon certains modes de réalisation de l'invention non représentés, la partie de préhension peut être formée de manière monobloc avec l'applicateur à proprement parler.

L'applicateur 1 de la figure 1 comporte une âme centrale 5 (pouvant également être désignée « noyau central »). L'âme centrale 5 est un élément droit qui s'étend, dans ce mode de réalisation, entre l'élément de jonction 5 et la deuxième extrémité 3 de l'applicateur. L'âme centrale 5 a avantageusement la forme d'une tige cylindrique. Des maillons 6 sont formés sur l'âme. Les maillons 6 sont alignés en une ou plusieurs rangées de maillons. Dans l'exemple de mode de réalisation ici représenté, l'applicateur 1 comporte quatre rangées de maillons, à savoir une première rangée 61, une deuxième rangée 62, une troisième rangée 63 et une quatrième rangée 64. Dans cet exemple, les rangées de maillons sont formées deux à deux dans des plans orientés à 90° l'un de l'autre et sécants sur l'axe longitudinal A. Autrement dit, les rangées 61, 62, 63, 64 sont régulièrement réparties autour de l'axe longitudinal A. Les maillons 6 comportent avantageusement (mais pas nécessairement) des protubérances 7. Les protubérances 7 sont décrites plus en détail ci-après.

L'âme centrale et les maillons 6 qui lui sont associés forment une partie dite partie fixe de l'applicateur 1.

L'applicateur 1 comporte en outre une partie mobile. La partie mobile est formée par au moins une chaîne 8 constituée d'un brin formant une succession de boucles 9 ouvertes.

Dans le présent mode de réalisation, l'applicateur 1 comporte deux chaînes, à savoir une première chaîne 81 et une deuxième chaîne 82.

Un exemple de géométrie de chaîne pouvant être utilisée dans le cadre de la présente invention est représentée à la figure 2. Les protubérances 7 portées par la chaîne 8 ont été omises à la figure 2 afin de mieux comprendre la configuration générale de la chaîne 8.

La chaîne 8 comporte ainsi un brin 91 qui comporte une succession de courbes et de segments formant des boucles 9. Les boucles 9 sont ouvertes, c'est-à-dire que le pourtour de chaque boucle n'est pas fermé et ménage une ouverture 92. La chaîne 8 est formée de deux rangs 93, 94 de boucles ouvertes, le premier rang 93 et le deuxième rang 94 étant sensiblement formés dans des plans P1, P2 orthogonaux entre eux.

Dans l'exemple de mode de réalisation de la figure 1, chaque boucle 9 de chaque rang est traversée par deux maillons 6 successifs d'une même rangée de maillons de l'applicateur. La chaîne 8 est ainsi liée à la partie fixe de l'applicateur, avec une certaine liberté de mouvement. En particulier, selon l'invention, la chaîne 8 peut se déplacer au moins longitudinalement (c'est-à-dire parallèlement à l'axe longitudinal A) vis-à-vis de la partie fixe. Avec une répartition régulière des maillons 6 le long de l'âme centrale 5, et des boucles 9 de mêmes dimensions, la valeur maximale de ce déplacement longitudinal correspond à la dimension intérieure d'une boucle 9 dans la direction longitudinale moins la distance entre deux maillons successifs, y compris l'épaisseur des deux maillons.

Dans l'exemple de mode de réalisation représenté, un certain mouvement de chaque chaîne dans les autres directions est également possible, du fait du montage « flottant » de chaque chaîne sur la partie fixe, obtenu par un entrelacement des boucles 9 et des maillons 6. Cette liberté de mouvement offre une plus grande souplesse apparente de l'applicateur, c'est-à-dire que l'utilisatrice a la sensation d'utiliser un applicateur souple même s'il est constitué d'un matériau rigide.

La partie mobile, ici constituée de deux chaînes 8, porte des protubérances 7. Les protubérances 7 ont avantageusement une orientation sensiblement perpendiculaire à l'axe longitudinal A, et de préférence une orientation radiale, c'est-à-dire selon une direction perpendiculaire et sécante vis-à-vis de l'axe longitudinal A.

Alternativement, les protubérances peuvent avoir des angles d'implantation différents, par exemple pour accompagner le mouvement d'application et/ou pour favoriser la rétention du produit cosmétique.

Les protubérances 7, qu'elles soient portées par les chaînes 8 de la partie mobile ou par la partie fixe et notamment les maillons 6, peuvent avoir des géométries diverses. Les protubérances 7 assurent plusieurs fonctions, notamment une fonction de rétention du produit cosmétique, une fonction d'application sur les cils de ce produit, une fonction de séparation des cils, une fonction de peignage. La configuration des protubérances est optimisée pour qu'elles remplissent conjointement ces fonctions. Toutes les protubérances peuvent ainsi avoir la même configuration, ou des configurations différentes. Dans l'exemple ici représenté, les protubérances sont cylindriques droites, de faible diamètre. Elles sont assimilables à des poils rigides. Des protubérances prismatiques ayant une section carrée, rectangulaire, ovale, etc. sont bien évidemment envisageables. De même, des protubérances coniques, tronconiques, pyramidales, ou toute autre section évolutive, peuvent être envisagées. Un premier groupe de protubérances 71 est porté par les chaînes de la partie mobile. Un second groupe de protubérances 72 est porté par les maillons de la partie fixe. Enfin, un troisième groupe de protubérances est porté par l'âme centrale 5.

Les protubérances de ces trois groupes ont des sections transversales identiques, mais des longueurs différentes, de sorte à ce que leur extrémité libre soit sensiblement à une même distance de l'axe longitudinal A (à l'exception éventuelle des protubérances à proximité des extrémités de l'âme centrale 5 qui peuvent être plus courtes), afin d'inscrire l'applicateur dans une enveloppe générale extérieure sensiblement cylindrique. Le fait que les protubérances ont des longueurs différentes permet de jouer sur leur souplesse : une protubérance plus longue sera plus souple qu'une protubérance plus courte (elle fléchira plus sous l'effet d'une même force appliquée à son extrémité).

L'applicateur peut ainsi être inscrit dans un cylindre ayant un diamètre compris entre 6 mm et 10 mm. Des applicateurs inscrits dans une enveloppe extérieure de 7 mm à 9,5 mm sont également envisageables. Une valeur optimale, en termes d'efficacité et de confort d'application, est de 8 mm ou d'environ 8 mm.

Selon les divers modes de réalisation de l'invention et les diverses configurations de protubérances pouvant être utilisées, la longueur des protubérances (dimension mesurée selon leur direction d'extension principale, typiquement radialement par rapport à l'axe longitudinal A) peut être comprise entre 0,2 mm et 0,5mm par exemple entre 0,24 mm et 0,40 mm.

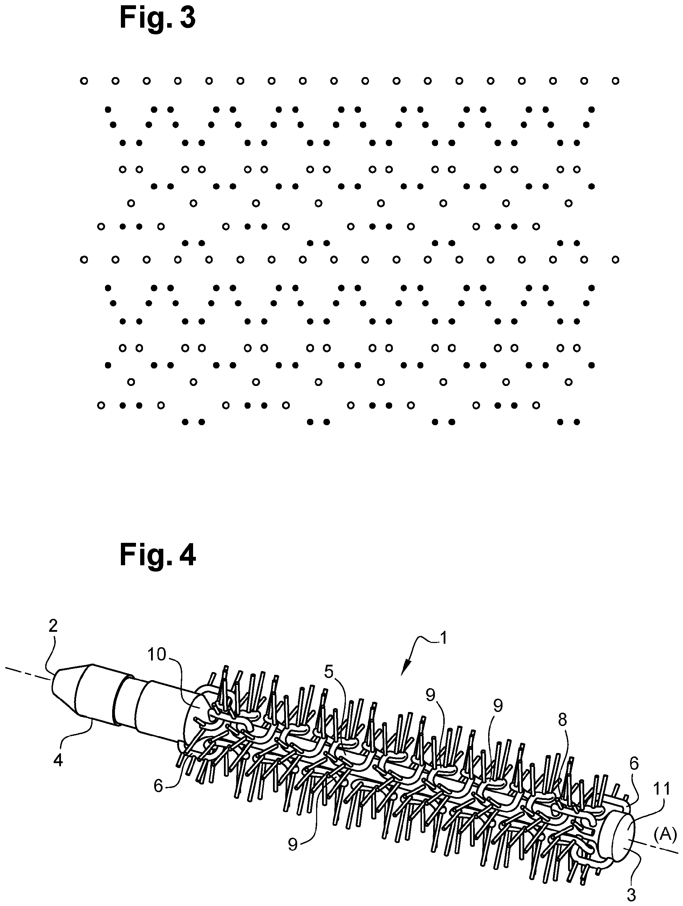

La figure 3 représente, selon un schéma de principe, la répartition des protubérances fixes de l'applicateur de la figure 1. Sur la figure 3, l'enveloppe extérieure dans laquelle s'inscrit l'applicateur a été développée, à plat. Les protubérances fixes sont représentées par des cercles (non-remplis) tandis que les protubérances mobiles ont été représentées par des cercles pleins. Dans l'exemple d'implantation représenté, on a ainsi créé, dans le sens de balayage de l'applicateur, une succession d'alignements de protubérances fixes et d'alignements de protubérances mobiles. Les cils sont ainsi successivement peignés par des protubérances fixes, qui séparent les cils, et des protubérances mobiles qui en s'adaptant aux cils et aux mouvements de l'utilisatrice confèrent un effet de peignage latéral (dans la direction longitudinale de l'applicateur) qui améliore l'application du produit cosmétique (par exemple améliore l'allongement des cils ou leur volume).

La figure 4 représente un deuxième mode de réalisation d'un applicateur conforme à l'invention. Ce mode de réalisation est analogue à celui de la figure 1, à l'exception de la configuration des maillons 6 assurant la liaison entre la partie fixe de l'applicateur et sa partie mobile. On peut donc se référer à la description du mode de réalisation de la figure 1, à l'exception des différences détaillées ci-après.

Ainsi, l'applicateur de la figure 4 se distingue de celui de la figure 1 en ce que les chaînes 8 de la partie mobile ne sont fixées à la partie fixe qu'au niveau des extrémités de l'âme centrale 5, à savoir au niveau d'une extrémité proximale 10 de l'âme, située à proximité de la partie de préhension et donc de l'interface avec l'élément de jonction 4 dans l'exemple représenté, et d'une extrémité distale 11 correspondant à la deuxième extrémité 3 de l'applicateur. Ainsi, à chacune des extrémités de l'âme, un seul maillon 6 est ménagé pour chacun des rangs de boucles des chaînes 8. Ainsi, dans l'exemple représenté, seule la boucle extrême de chaque rang de chaque chaîne est liée à la partie fixe. L'âme centrale comporte pour cela quatre maillons à chaque extrémité, régulièrement répartis autour de l'âme centrale 5, dont la disposition longitudinale est adaptée pour que le maillon considéré traverse la première boucle 9 complète d'une rangée de boucles 9. Cela permet aux chaînes de la partie mobile de se déformer, de se courber légèrement, lors de l'application d'un produit cosmétique sur les cils de l'utilisatrice. Cette souplesse améliore le confort d'application, en particulier lorsqu'un matériau relativement rigide est utilisé. C'est généralement le cas des matériaux plastiques pouvant être utilisés dans un procédé de fabrication additive.

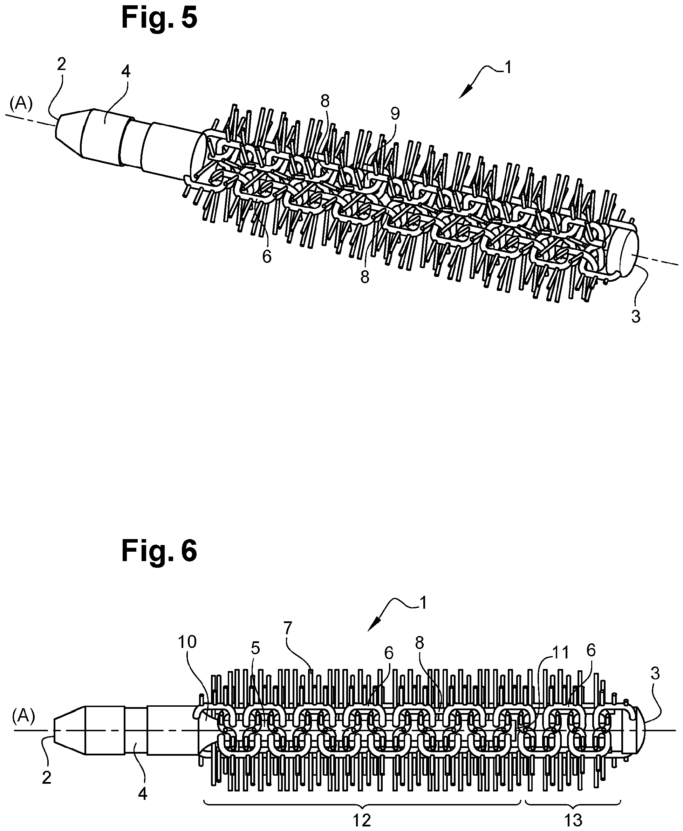

La figure 5 représente un troisième mode de réalisation d'un applicateur conforme à l'invention. Ce mode de réalisation est en partie analogue à celui des figures 1 et 4, à l'exception de la configuration de la partie fixe de l'applicateur. On peut donc se référer à la description du mode de réalisation de la figure 1, à l'exception des différences détaillées ci-après.

Ainsi, l'applicateur de la figure 5 se distingue de celui de la figure 1 en ce qu'il ne comporte pas d'âme centrale. La partie fixe de l'applicateur est ainsi formée d'un ou plusieurs brins (en l'occurrence deux brins dans l'exemple représenté) formant chacun une chaîne de maillons 6 ouverts.

Les chaînes de maillons sont liées d'une part à l'élément de jonction 4 et d'autre part à la deuxième extrémité 3 de l'applicateur 1.

En l'occurrence, les chaînes de maillons ont la même géométrie que les chaînes 8 de boucles 9 de la partie mobile de l'applicateur. Les chaines de maillons présentent ainsi deux rangées de maillons ménagées dans des plans sensiblement orthogonaux.

Les maillons ouverts des chaînes de maillons sont entrelacés avec les boucles ouvertes de la partie mobile.

L'absence d'âme et la configuration de la partie fixe (les maillons ouverts ayant la faculté de se déformer plus facilement qu'un maillon fermé) offre à l'ensemble de l'applicateur une souplesse importante. En particulier, la partie fixe et la partie mobile peuvent toutes les deux se déformer, se courber. La partie mobile est en outre particulièrement libre de se déplacer non seulement longitudinalement mais également dans les autres directions, ce qui augmente la sensation de souplesse et d'adaptabilité de l'applicateur lors de son utilisation.

La figure 6 représente un applicateur dans un mode de réalisation pouvant être décrit comme une configuration intermédiaire entre celle de la figure 1 et celle de la figure 5. Ainsi, l'applicateur pour produit cosmétique de la figure 6 comporte une âme centrale 5, qui ne s'étend que sur une partie de la longueur de l'applicateur. Des maillons 6 sont formés sur toute la longueur de l'âme centrale 5. Chaque rangée de maillons est poursuivie, au-delà de l'extrémité distale 11 de l'âme, par une chaine de maillons qui s'étend jusqu'à la deuxième extrémité 3 de l'applicateur.

Il est ainsi possible de former un applicateur 1 qui présente deux portions longitudinales, à savoir une première portion longitudinale 12 et une deuxième portion longitudinale 13, la première portion longitudinale 12 présentant une plus grande rigidité, en particulier une plus grande résistance à la flexion, que la deuxième portion longitudinale 13. Par exemple, la première portion longitudinale 12 peut former la portion principale de l'applicateur pour l'application de produit cosmétique sur les cils, tandis que la deuxième portion longitudinale 13 peut former une brosse de retouche ou permettant l'obtention d'un effet local (d'allongement, de courbure, etc.) particulier.

Du fait de leur configurations complexes, les applicateurs décrits ci-dessus sont avantageusement (voire nécessairement pour certains modes de réalisation) fabriqués par une technique de fabrication additive. La fabrication additive par fusion sur lit de poudre est la technique préférée pour former un applicateur selon la présente invention.

L'applicateur est avantageusement formé en matériau plastique. Dans certains modes de réalisation, l'applicateur est formé en un seul matériau. Dans d'autres modes de réalisation, la partie fixe et la partie mobile sont réalisées en deux matériaux différents. Un polyamide, de préférence un polyamide aliphatique, par exemple du polyamide 11, peut être utilisé pour former la partie fixe et/ou la partie mobile. Du polypropylène peut être utilisé pour former la partie fixe et/ou la partie mobile.

L'invention ainsi développée propose un applicateur pour produit cosmétique, en particulier un applicateur de mascara, permettant une application de grande qualité avec une gestuelle simple. Le confort d'utilisation, notamment la sensation de souplesse de l'applicateur est conservée malgré l'utilisation possible d'un matériau dur, par exemple d'un plastique rigide compatible d'un procédé de fabrication additive.

## Revendications

1. Applicateur pour produit cosmétique présentant une forme générale allongée et s'étendant selon un axe longitudinal (A) définissant une direction longitudinale, l'applicateur (1) comportant une partie fixe, destinée à être rigidement liée à une partie de préhension ou formée de manière monobloc avec ladite partie de préhension, l'applicateur comportant une partie mobile vis-à-vis de la partie fixe, la partie mobile comportant des protubérances (7), **caractérisé en ce que**
la partie mobile comporte au moins une chaîne (8) comportant un brin (91) formant une succession de boucles (9) ouvertes, ladite chaîne s'étendant sensiblement parallèlement à l'axe longitudinal (A),
la partie fixe comporte au moins deux maillons (6),
au moins deux desdites boucles (9) ouvertes de chaque chaîne (8) étant traversées par un maillon (6) de la partie fixe,
de sorte que chaque chaîne (8) de la partie mobile est fixée avec au moins un degré de liberté à la partie fixe, permettant un déplacement relatif de la chaîne vis-à-vis de la partie fixe dans la direction longitudinale.

2. Applicateur selon la revendication 1, dans lequel chaque chaîne (8) de la partie mobile forme un premier rang (93) de boucles ouvertes (9) et un deuxième rang (94) de boucles ouvertes (9), le premier rang (93) de boucles ouvertes (9) étant formé dans un premier plan (P1) parallèle à l'axe longitudinal (A), le deuxième rang (94) de boucles ouvertes (9) étant formé dans un deuxième plan (P2) parallèle à l'axe longitudinal (A), distinct dudit premier plan (P1).

3. Applicateur selon la revendication 2, dans lequel les chaînes (8) de la partie mobile sont au nombre de deux.

4. Applicateur selon l'une des revendications 1 à 3, dans lequel la partie fixe comporte une âme centrale (5) s'étendant selon l'axe longitudinal (A).

5. Applicateur selon la revendication 4, dans lequel l'âme centrale (5) comporte une première extrémité (10) et une deuxième extrémité (11), la première extrémité (10) et la deuxième extrémité (11) portant chacune au moins un maillon (6).

6. Applicateur selon la revendication 5, dans lequel l'âme centrale (5) porte au moins une rangée (61...64) de maillons (6) s'étendant sur toute une longueur de l'âme centrale (5), selon la direction longitudinale, et est configurée de sorte que chaque boucle (9) de chaque chaîne (8) de la partie mobile est traversée par deux maillons (6).

7. Applicateur selon l'une des revendications précédentes, dans lequel au moins une portion longitudinale de la partie fixe comporte un ou plusieurs brins formant chacun une chaîne de maillons (6) ouverts entrelacés avec au moins certaines des boucles (9) ouvertes de la partie mobile.

8. Applicateur selon la revendication 7, dans lequel les chaînes de la partie mobile et les chaînes de la partie fixe ont une même configuration.

9. Applicateur selon l'une des revendications précédentes, dans lequel la partie fixe porte des protubérances (7).

10. Applicateur selon l'une des revendications précédentes dans lequel les protubérances (7) sont orientées sensiblement perpendiculairement à l'axe longitudinal (A).

11. Applicateur selon la revendication 9 ou la revendication 10 dans lequel les protubérances (7) de la partie fixe diffèrent en taille et/ou en forme des protubérances (7) de la partie mobile.

12. Applicateur selon l'une des revendications précédentes, dans lequel chaque protubérance (7) est sensiblement cylindrique ou prismatique et a une longueur comprise entre 0,2 mm et 0,5mm par exemple entre 0,24 mm et 0,40 mm.

13. Applicateur selon l'une des revendications précédentes, dans lequel chaque protubérance (7) comporte une extrémité libre opposée à l'axe longitudinal (A), ledit applicateur (1) s'inscrivant dans une enveloppe extérieure définie par les extrémités libres des protubérances (7), ladite enveloppe étant sensiblement cylindrique et d'un diamètre compris entre 6 mm et 10 mm, par exemple entre 7 mm et 9 mm, tel que 8 mm.

14. Applicateur selon l'une des revendications précédentes, dans lequel la partie fixe et/ou la partie mobile est réalisée en polyamide, par exemple en polyamide 11, ou en polypropylène.

15. Procédé de fabrication d'un applicateur selon l'une des revendications précédentes, ledit procédé comportant une étape de fusion sur lit de poudre d'un matériau plastique.

## Patentansprüche

1. Applikator für ein kosmetisches Produkt, der eine längliche allgemeine Form aufweist und sich entlang einer Längsachse (A) erstreckt, die eine Längsrichtung definiert,
wobei der Applikator (1) einen festen Teil aufweist, der dazu bestimmt ist, starr mit einem Greifteil verbunden zu sein, oder einstückig mit dem Greifteil ausgebildet ist, wobei der Applikator einen dem festen Teil gegenüberliegenden beweglichen Teil aufweist, wobei der bewegliche Teil Vorsprünge (7) aufweist,
**dadurch gekennzeichnet, dass**
der bewegliche Teil mindestens eine Kette (8) mit einem Strang (91) aufweist, der eine Folge von offenen Schlaufen (9) bildet, wobei sich die Kette im Wesentlichen parallel zur Längsachse (A) erstreckt, wobei der feste Teil mindestens zwei Glieder (6) aufweist,
wobei mindestens zwei der offenen Schlaufen (9) jeder Kette (8) von einem Glied (6) des festen Teils durchquert werden,
so dass jede Kette (8) des beweglichen Teils mit mindestens einem Freiheitsgrad am festen Teil befestigt ist, wodurch eine relative Bewegung der Kette in Bezug auf den festen Teil in der Längsrichtung ermöglicht wird.

2. Applikator nach Anspruch 1, wobei jede Kette (8) des beweglichen Teils eine erste Reihe (93) offener Schlaufen (9) und eine zweite Reihe (94) offener Schlaufen (9) bildet, wobei die erste Reihe (93) offener Schlaufen (9) in einer zur Längsachse (A) parallelen ersten Ebene (P1) ausgebildet ist, wobei die zweite Reihe (94) offener Schlaufen (9) in einer zur Längsachse (A) parallelen und von der ersten Ebene (P1) verschiedenen zweiten Ebene (P2) ausgebildet ist.

3. Applikator nach Anspruch 2, wobei die Anzahl der Ketten (8) des beweglichen Teils zwei beträgt.

4. Applikator nach einem der Ansprüche 1 bis 3, wobei der feste Teil einen zentralen Kern (5) aufweist, der sich entlang der Längsachse (A) erstreckt.

5. Applikator nach Anspruch 4, wobei der zentrale Kern (5) ein erstes Ende (10) und ein zweites Ende (11) aufweist, wobei das erste Ende (10) und das zweite Ende (11) jeweils mindestens ein Glied (6) tragen.

6. Applikator nach Anspruch 5, wobei der zentrale Kern (5) mindestens eine Reihe (61 ... 64) von Gliedern (6) aufweist, die sich entlang der Längsrichtung über die gesamte Länge des zentralen Kerns (5) erstreckt, und so konfiguriert ist, dass jede Schlaufe (9) jeder Kette (8) des beweglichen Teils von zwei Gliedern (6) durchquert wird.

7. Applikator nach einem der vorangehenden Ansprüche, wobei mindestens ein Längsabschnitt des festen Teils einen oder mehrere Stränge aufweist, die jeweils eine Kette aus offenen Gliedern (6) bilden, die mit zumindest einigen der offenen Schlaufen (9) des beweglichen Teils verflochten sind.

8. Applikator nach Anspruch 7, wobei die Ketten des beweglichen Teils und die Ketten des festen Teils die gleiche Konfiguration aufweisen.

9. Applikator nach einem der vorangehenden Ansprüche, wobei der feste Teil Vorsprünge (7) trägt.

10. Applikator nach einem der vorangehenden Ansprüche, wobei die Vorsprünge (7) im Wesentlichen senkrecht zur Längsachse (A) ausgerichtet sind.

11. Applikator nach Anspruch 9 oder Anspruch 10, wobei sich die Vorsprünge (7) des festen Teils in Größe und/oder Form von den Vorsprüngen (7) des beweglichen Teils unterscheiden.

12. Applikator nach einem der vorangehenden Ansprüche, wobei jeder Vorsprung (7) im Wesentlichen zylindrisch oder prismatisch ist und eine Länge zwischen 0,2 mm und 0,5 mm, beispielsweise zwischen 0,24 mm und 0,40 mm, aufweist.

13. Applikator nach einem der vorangehenden Ansprüche, wobei jeder Vorsprung (7) ein der Längsachse (A) gegenüberliegendes freies Ende aufweist, wobei der Applikator (1) in eine äußere Hülle passt, die durch die freien Enden der Vorsprünge (7) definiert ist, wobei die Hülle im Wesentlichen zylindrisch ist und einen Durchmesser zwischen 6 mm und 10 mm, beispielsweise zwischen 7 mm und 9 mm, etwa 8 mm, aufweist.

14. Applikator nach einem der vorangehenden Ansprüche, wobei der feste Teil und/oder der bewegliche Teil aus Polyamid, beispielsweise aus Polyamid 11, oder aus Polypropylen gefertigt ist.

15. Verfahren zur Herstellung eines Applikators nach einem der vorangehenden Ansprüche, wobei das Verfahren einen Schritt des Schmelzens eines Kunststoffmaterials auf einem Pulverbett umfasst.

## Claims

1. Applicator for a cosmetic product, having an elongate overall shape and extending along a longitudinal axis (A) defining a longitudinal direction, the applicator (1) having a fixed part, intended to be rigidly connected to a gripping part or formed in one piece with said gripping part, the applicator having a mobile part that is able to move with respect to the fixed part, the mobile part having protuberances (7), **characterized in that**
the mobile part has at least one chain (8) having a strand (91) forming a succession of open loops (9), said chain extending substantially parallel to the longitudinal axis (A),
the fixed part has at least two links (6),
at least two of said open loops (9) of each chain (8) being passed through by a link (6) of the fixed part, such that each chain (8) of the mobile part is fastened with at least one degree of freedom to the fixed part, allowing relative movement of the chain with respect to the fixed part in the longitudinal direction.

2. Applicator according to Claim 1, wherein each chain (8) of the mobile part forms a first rank (93) of open loops (9) and a second rank (94) of open loops (9), the first rank (93) of open loops (9) being formed in a first plane (P1) parallel to the longitudinal axis (A), the second rank (94) of open loops (9) being formed in a second plane (P2) parallel to the longitudinal axis (A), which is distinct from said first plane (P1).

3. Applicator according to Claim 2, wherein the chains (8) of the mobile part are two in number.

4. Applicator according to one of Claims 1 to 3, wherein the fixed part has a central core (5) extending along the longitudinal axis (A).

5. Applicator according to Claim 4, wherein the central core (5) has a first end (10) and a second end (11), the first end (10) and the second end (11) each bearing at least one link (6).

6. Applicator according to Claim 5, wherein the central core (5) bears at least one row (61...64) of links (6) extending over the entire length of the central core (5), in the longitudinal direction, and is configured such that each loop (9) of each chain (8) of the mobile part is passed through by two links (6).

7. Applicator according to one of the preceding claims, wherein at least one longitudinal portion of the fixed part has one or more strands each forming a chain of open links (6) interlaced with at least some of the open loops (9) of the mobile part.

8. Applicator according to Claim 7, wherein the chains of the mobile part and the chains of the fixed part have one and the same configuration.

9. Applicator according to one of the preceding claims, wherein the fixed part bears protuberances (7).

10. Applicator according to one of the preceding claims, wherein the protuberances (7) are oriented substantially perpendicular to the longitudinal axis (A).

11. Applicator according to Claim 9 or Claim 10, wherein the protuberances (7) of the fixed part differ in size and/or in shape from the protuberances (7) of the mobile part.

12. Applicator according to one of the preceding claims, wherein each protuberance (7) is substantially cylindrical or prismatic and has a length of between 0.2 mm and 0.5 mm, for example between 0.24 mm and 0.40 mm.

13. Applicator according to one of the preceding claims, wherein each protuberance (7) has a free end opposite the longitudinal axis (A), said applicator (1) being inscribed in an outer envelope defined by the free ends of the protuberances (7), said envelope being substantially cylindrical and having a diameter of between 6 mm and 10 mm, for example between 7 mm and 9 mm, such as 8 mm.

14. Applicator according to one of the preceding claims, wherein the fixed part and/or the mobile part is made of polyamide, for example of polyamide 11, or of polypropylene.

15. Method for manufacturing an applicator according to one of the preceding claims, said method involving a step of powder bed fusion of a plastics material.
